# EUROPÄISCHE PATENTSCHRIFT

(11) **EP 0 988 241 B1**
(45) Veröffentlichungstag und Bekanntmachung des Hinweises auf die Patenterteilung: **16.01.2002**
(21) Anmeldenummer: 99908734.9
(22) Anmeldetag: 31.03.1999
(51) Int. Cl.: B65G 39/16, B65H 23/038

(54) **FÖRDEREINRICHTUNG**
TRANSPORTATION DEVICE
DISPOSITIF DE TRANSPORT

(30) Priorität: 14.04.1998 DE 19816466
(43) Veröffentlichungstag der Anmeldung: 29.03.2000
(73) Patentinhaber: Bucher-Guyer AG, 8166 Niederweningen (CH)
(72) Erfinder: HARTMANN, Eduard, CH-5425 Schneisingen (CH)
(86) Internationale Anmeldenummer: CH9900134
(87) Internationale Veröffentlichungsnummer: WO9952801

(56) Entgegenhaltungen:
- DE-A- 3 152 151
- GB-A- 570 873
- GB-A- 1 040 451
- US-A- 3 743 152

## Beschreibung

Die Erfindung betrifft eine Fördereinrichtung mit einem mindestens zwei Walzen umlaufenden Förderband, bei der mindestens eine der Walzen drehbar an einem Drehlager gehalten und zumindest teilweise in axialer Richtung bezüglich dem Drehlager verschiebbar ist (bekannt aus DE-A-3 152 151).

Als Stetigförderer einsetzbare Bandförderanlagen werden heute nicht nur zu Förderzwecken, sondern in zunehmendem Maße auch im Zusammenhang mit einer weiteren Behandlung des Fördergutes eingesetzt. Insbesondere im Bereich der Lebensmitteltechnik hat dabei die Trocknung auf dem Förderband geförderten Lebensmitteln an Bedeutung gewonnen. Dabei wird zur Trocknung ein zwischen dem oberen Trum und dem unteren Trum des Förderbandes angeordnetes Heizelement benutzt. Zur Förderung des Trocknungsvorgangs kann das Förderband ferner in einer evakuierbaren Vakuumkammer angeordnet werden. Zur Gewährleistung eines hohen Wirkungsgrades der Trocknungseinrichtung werden üblicherweise besonders dünne Förderbänder eingesetzt, die einen guten Wärmeübergang zwischen dem Heizelement und dem zu trocknenden Material erlauben.

Beim Einsatz dieser besonders dünnen Förderbänder kommt es jedoch häufig zu Verwerfungen oder Verschiebungen des Förderbandes längs der Antriebs- und/oder Umlenkwalzen der Fördereinrichtung. Zur Beseitigung dieser Verwerfungen und Verschiebungen wurden Kippmechanismen vorgeschlagen, mit denen eine Verkippung der Antriebs- und/oder Umlenkwalzen um eine senkrecht zur Walzenachse verlaufende Kippachse bewirkt werden. Zusammenwirkend mit der Spannung des Förderbandes kann mit einer derartigen Verkippung einer axialen Verschiebung und in geringerem Umfang auch einer Verwerfung des Förderbandes längs der Walzenachse entgegengewirkt werden.

Es hat sich jedoch gezeigt, daß der Einsatz dieser Kippmechanismen aufgrund des damit verbundenen baulichen Mehraufwandes eine mangelhafte Betriebszuverlässigkeit der Fördereinrichtung zum Ergebnis hat.

Zur Behebung dieses Mangels wurde vorgeschlagen, Verschiebungen des Förderbandes in Richtung der Drehachse einer Antriebs- und/oder Umlenkwalze durch eine axiale Verschiebung der Walze selbst entgegenzuwirken. Dabei hat es sich jedoch als nachteilhaft herausgestellt, daß eine axiale Verschiebung von drehbar gelagerten Walzenteilen, wie etwa Wellen- oder Achsstümpfen einen hohen Verschleiß des Drehlagers verursachen. Ferner hat es sich beim Einsatz von Bandförderern in evakuierbaren Kammern, bei denen das Drehlager an der Kammerwand angeordnet ist, als nachteilhaft herausgestellt, daß die Dichtwirkung eines bei einer Drehung des in dem Drehlager aufgenommenen Walzenteils eine zufriedenstellende Abdichtung des Innenraums der Kammer gegen die Umgebung bewirkenden Dichtelementes bei einer axialen Verschiebung des drehbar gelagerten Walzenteils in dem Drehlager rasch abnimmt. Das hat wiederum eine deutliche Beeinträchtigung der Betriebszuverlässigkeit derartiger Fördereinrichtungen zum Ergebnis.

Zur Behebung dieses Mangels wurden zum Einsatz in evakuierbaren Kammern gedachte Bandförderer vorgeschlagen, die eine Antriebs- und/oder Umlenkwalze mit einem über Achs- bzw. Wellenstümpfe drehbar aber in axialer Richtung festliegend in gegenüberliegenden Kammerwänden gehaltenen Walzenteil und einem axial verschiebbar an dem in axialer Richtung festliegenden Walzenteil festgelegtes Walzenteil aufweisen. Bei einem in der DE 31 52 151 C2 angegebenen Bandförderer dieser Art ist das axial verschiebbare Walzenteil in Form einer kreiszylindermantelsegmentförmigen Halbschale gebildet, die mit Halteringen auf den Achs- bzw. Wellenstümpfen gehalten ist.

Daneben sind in der genannten Schrift, aber auch in der US 3,743,152 Fördereinrichtungen der beschriebenen Art angegeben, bei denen verschiebbare Walzenteile in Form von Leisten vorhanden sind, die axial verschiebbar an dem in axialer Richtung festliegenden Walzenteil befestigt sind. Bei diesen Bandförderern wird die axiale Verschiebung der axial verschiebbaren Walzenteile mit Verstellelementen in Form von pneumatischen Zylindern, elektrischen oder mechanischen Stellorganen bewirkt, die innerhalb der evakuierbaren Kammer angeordnet sind. Dadurch wird einerseits das zu evakuierende Gesamtvolumen vergrößert und andererseits die Betriebszuverlässigkeit beeinträchtigt, weil Undichtigkeiten von als Verstellelement einsetzbaren pneumatischen Zylindern den Druck innerhalb der evakuierbaren Kammer erhöhen können, über mechanische Gestänge von außen eingeleitete Korrekturen aufwendig sind und ebenfalls zu Dichtungsproblemen führen können und sich beim Einsatz elektrischer Verstellelemente Sicherheitsrisiken bei der Verarbeitung von Gütern mit explosiven flüchtigen Komponenten ergeben. Insgesamt ist die Funktionssicherheit der bekannten Bandförderer daher nur gering und es kommt immer wieder zu Betriebsstörungen.

Angesichts der vorstehend erläuterten Probleme im Stand der Technik liegt dieser Erfindung die Aufgabe zugrunde, eine baulich einfache Fördereinrichtung anzugeben, die eine hohe Betriebszuverlässigkeit und Funktionssicherheit gewährleistet.

Erfindungsgemäß wird diese Aufgabe durch eine Fördereinrichtung der eingangs angegebenen Art gelöst, die im wesentlichen dadurch gekennzeichnet ist, daß das Drehlager ein um die Achse der daran gehaltenen Walze drehbares Lagerteil aufweist und die an dem Drehlager gehaltene Walze mit einem das Drehlager durchsetzenden und drehfest an das Lagerteil gekoppelten Bauelement versehen ist, das in axialer Richtung bezüglich dem Lagerteil verschiebbar ist.

Diese Erfindung beruht auf der Erkenntnis, daß die beim Einsatz bekannter Fördereinrichtungen mit einer eine axiale Verschiebung erlaubenden Drehdurchführung beobachteten Probleme hinsichtlich der Haltbarkeit der Drehdurchführung und der Dichtwirkung von der Drehdurchführung zugeordneten Dichtelementen gelöst werden können, wenn die axiale Verchiebung der Walze bzw. eines Walzenteils von der Drehbewegung entkoppelt wird. Mit der erfindungsgemäßen Fördereinrichtung erfolgt diese Entkopplung, indem das Drehlager mit einem um die Achse der daran gehaltenen Walze drehbaren Lagerteil versehen wird und die axiale Verschiebung über ein bei einer Drehbewegung dieses Lagerteils mitgeführtes Bauelement erfolgt. Mit dieser Anordnung kann die axiale Verschiebung der Walze bzw. des axial verschiebbaren Walzenteils über das die Drehdurchführung durchsetzende, und so an der der Walze abgewandten Seite des Drehlagers zugängliche Bauelement eingeleitet werden. Auf diese Weise kann die axiale Verschiebung eines in einer evakuierbaren Kammer eingebauten Förderbandes mit einem außerhalb der Kammer angeordneten Verstellmechanismus über das das Drehlager durchsetzenden Bauelement erfolgen. Dadurch kann das zu evakuierende Volumen reduziert und gleichzeitig die Betriebszuverlässigkeit erhöht werden, weil neben dem axial verschiebbaren Walzenteil kein weiteres Verstellelement innerhalb der evakuierbaren Kammer angeordnet werden muß.

Insbesondere zur Beseitigung von Verwerfungen des Förderbandes aber auch zur Beseitigung von axialen Verschiebungen des Förderbandes in Bezug auf die Walzen der Fördereinrichtung selbst hat es sich als besonders zweckmäßig erwiesen, wenn die Walze mindestens zwei in Umfangsrichtung aufeinanderfolgende Außenflächen der Walze bildende Walzenteile aufweist, von denen eines an das axial verschiebbare Bauelement gekoppelt und das andere in axialer Richtung bezüglich dem Drehlager festgelegt ist. Mit dieser Anordnung kann eine axiale Verschiebung in Bezug auf die Walze selbst beseitigt werden, indem das an das axial verschiebbare Bauelement gekoppelte Walzenteil in einer Betriebsphase, in der dessen Außenfläche nicht an dem Förderband anliegt, in der der Verschiebung des Förderbandes entsprechenden Richtung axial verschoben wird und in der Betriebsphase in der seine Außenfläche an dem Förderband anliegt in der dazu entgegengesetzten Richtung verschoben wird. In diesem Zusammenhang hat es sich als besonders günstig erwiesen, wenn die erfindungsgemäße Fördereinrichtung einen die Lage des Förderbandes erfassenden Sensor und eine Steuereinrichtung aufweist, mit der ein an das drehfest an das drehbare Lagerteil gekoppelte Bauelement gekoppelter Verstellmechanismus ansprechend auf von dem Sensor abgegebene Lagesignale angesteuert wird.

Aus Stabilitätsgründen hat es sich als besonders vorteilhaft erwiesen, wenn das in axialer Richtung bezüglich dem Drehlager festgelegte Walzenteil an das drehbare Lagerteil gekoppelt ist. Das drehbare Lagerteil kann dabei besonders einfach in Form einer von einer Ausnehmung durchsetzten vorzugsweise hohlzylinderförmigen Hülse gebildet sein. Bei dieser Ausführungsform weist das drehfest an das drehbare Lagerteil gekoppelte Bauelement zweckmäßigerweise die Form eines in der Ausnehmung aufgenommenen, vorzugsweise etwa kreiszylinderförmigen Achs- bzw. Wellenstumpfes auf.

Eine weitere Erhöhung der Stabilität der erfindungsgemäßen Fördereinrichtung kann erreicht werden, wenn das drehfest an das drehbare Lagerteil gekoppelte Bauelement eine die die Außenfläche der Walze bildenden Walzenteile abstützende Welle, vorzugsweise eine Vollwelle ist.

Herstellungstechnisch hat es sich als besonders günstig erwiesen, wenn mindestens eines der die Außenfläche der Walzen bildenden Walzenteile die Form eines Kreiszylinder-Mantelsegmentes vorzugsweise einer Kreiszylindermantel-Halbschale, d. h. eines durch Schnitt eines Kreizylindermantels längs einer Axialebene erhaltenen Teils, aufweist.

Zur Gewährleistung einer zufriedenstellenden Förderleistung ohne Schlupf ist die Außenfläche der Walze zweckmäßigerweise zumindest teilweise mit reibungserhöhenden Mitteln versehen. Diese Mittel können beispielsweise in Form einer Beschichtung aus einem Elastomermaterial, vorzugsweise Gummi, vorliegen. Zur kontrollierten Abführungen von Verschmutzungen können die reibungserhöhenden Mittel ferner durch Rillen voneinander getrennte, sich in axialer Richtung erstreckende, radiale Vorsprünge aufweisen. Wenn das Förderband zusammen mit den Walzen in einer verschließbaren und vorzugsweise auch noch evakuierbaren Kammer eingebaut ist, kann das Drehlager in einer Kammerwand eingeordnet sein, wobei das drehfest an das drehbare Lagerteil gekoppelte Bauelement die Kammerwand durchsetzt und außerhalb der Kammer zugänglich ist. Bei dieser Anordnung kann die axiale Verschiebung mit einem außerhalb der Kammer angeordneten Verstellmechanismus bewirkt werden.

Bei Einbau einer erfindungsgemäßen Fördereinrichtung in eine evakuierbare Kammer kann eine zufriedenstellende Abdichtung des in eine Kammer eingebauten Drehlagers erreicht werden, wenn zwischen dem drehbaren Lagerteil und der Kammerwand eine Drehdichtung angeordnet ist, die zur Sicherstellung einer zuverlässigen Dichtwirkung bei einer Drehbewegung ausgelegt ist. Eine derartige Drehdichtung kann in Form eines O-Ringes verwirklicht werden.

Daneben kann die erfindungsgemäße Fördereinrichtung auch noch eine zwischen dem drehbaren Lagerteil und dem drehfest daran gekoppelten Bauelement angeordnete Verschiebedichtung aufweisen, mit der eine zuverlässige Dichtung bei einer axialen Verschiebung des an das drehbare Lagerteil gekoppelten Bauelementes sichergestellt wird. Eine derartige Verschiebedichtung kann beispielsweise eine umlaufende und einen spitzen Winkel mit der Walzenachse einschließende Dichtlippe aufweisen. Dabei wird eine besonders gute Dichtwirkung erhalten, wenn die Dichtlippe an dem Lagerteil oder dem drehfest daran gekoppelten Bauelement festgelegt ist und sich ausgehend davon schräg in axialer Richtung nach außen in Richtung auf das jeweils andere Bauteil erstreckt. Bei dieser Anordnung bewirkt der das Dichtelement von außen beaufschlagende Atmosphärendruck eine Erhöhung der Dichtwirkung.

Falls das axial verschiebbare Walzenteil an einer Antriebswalze angeordnet ist, kann die eine Drehbewegung der Antriebswalze erzeugende Antriebseinrichtung an das drehbare Lagerteil und/oder das drehfest daran gekoppelte Bauelement angekoppelt sein.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird erläutert. In der Zeichnung zeigt:
- Fig. 1a: einen Axialschnitt durch eine Antriebswalze einer Fördereinrichtung gemäß einer ersten Ausführungsform der Erfindung,
- Fig. 1b: eine längs der Schnittebene A-A in Fig. 1a genommenen Radialschnitt der Antriebswalze nach Fig. 1a,
- Fig. 2a: einen Axialschnitt durch eine Antriebswalze einer Fördereinrichtung gemäß einer zweiten Ausführungsform der Erfindung,
- Fig. 2b: einen Radialschnitt der Antriebswalze nach Fig. 2a längs der Schnittebene A-A,
- Fig. 3a bis 3d: perspektivische Darstellungen einer erfindungsgemäßen Fördereinrichtung zur Erläuterung der Funktion dieser Fördereinrichtung.

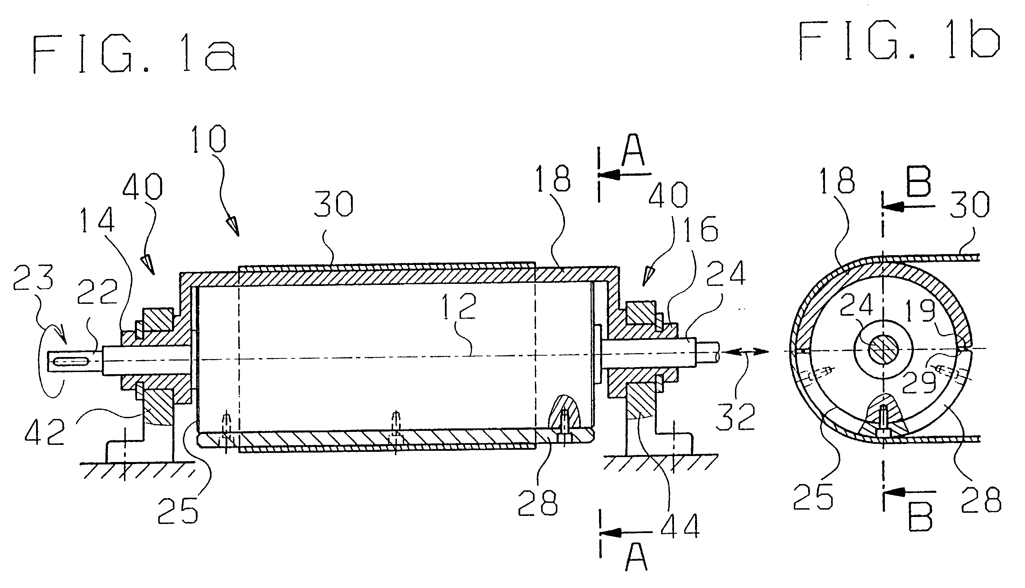

Die in Fig. 1 dargestellte Antriebswalze einer Fördereinrichtung gemäß einer ersten Ausführungsform der Erfindung umfaßt eine von einem Förderband 30 umlaufene Antriebswalze 10, die an einem beidseits der Walze jeweils ein Halteelement 42 bzw. 44 aufweisenden Halter 40 drehbar gelagert ist. Dazu sind in den auf einander entgegengesetzten Seiten der Antriebswalze 10 angeordneten Halteteilen 42 und 44 etwa kreiszlyindermantelförmige Hülsen 14 und 16 drehbar aber axial unverschiebbar aufgenommen. Die Hülsen 14 und 16 sind über ein Walzenteil 18 einstückig miteinander verbunden. Das Walzenteil 18 bildet dabei einen Teil der Außenfläche der Antriebswalze in Form einer Kreiszylindermantel-Halbschale (vgl. Fig. 1b).

In den um die Walzenachse 12 drehbaren Hülsen 14 und 16 ist jeweils ein Wellenstumpf 22 bzw. 24 einer Vollwelle 25 aufgenommen. Die Vollwelle 25 ist zusammen mit den Wellenstümpfen 22 und 24 bezüglich den Hülsen 14 und 16 axial verschiebbar, wie durch den Doppelpfeil 32 angedeutet.

An der Vollwelle 25 ist ein einen weiteren Teil der Außenfläche der Antriebswalze bildendes Walzenteil 28 befestigt. Dieses Walzenteil weist ebenfalls die Form einer Kreiszylindermantel-Halbschale auf. Die Befestigung des Walzenteils 28 an der Vollwelle 25 wird durch Schrauben bewirkt. Dadurch wird sichergestellt, daß das Walzenteil 28 einer axialen Verschiebung der Vollwelle 25 bzw. der Wellenstümpfe 22 und 24 bezüglich den Hülsen 14 und 16 folgt.

Wie besonders deutlich in Fig. 1b dargestellt, liegen die Stirnflächen 19 der Kreiszylindermantel-Halbschale 18 an den Stirnflächen 29 der Kreiszylindermantel-Halbschale 28 an. Dadurch wird eine drehfeste Kopplung der Kreiszylindermantel-Halbschale 28 und damit der Welle 25 und der Wellenstümpfe 22 und 24 an die einstückig mit dem Walzenteil 18 verbundenen Hülsen 14 und 16 erreicht. Auf diese Weise wird die axiale Verschiebung des Walzenteils 28 über die Wellenstümpfe 22 und 24 und die Welle 25 von der Drehung der Hülsen 14 und 16 in den Halterteilen 42 und 44 entkoppelt, was zu einer deutlichen Entlastung des durch die Halteteile 42 und 44 und die Hülsen 14 und 16 gebildeten Drehlagers führt. Der Antrieb der Antriebswalze 10 kann bei der hier dargestellten Ausführungsform über den Wellenstumpf 22 erfolgen, wie durch den Pfeil 23 angedeutet.

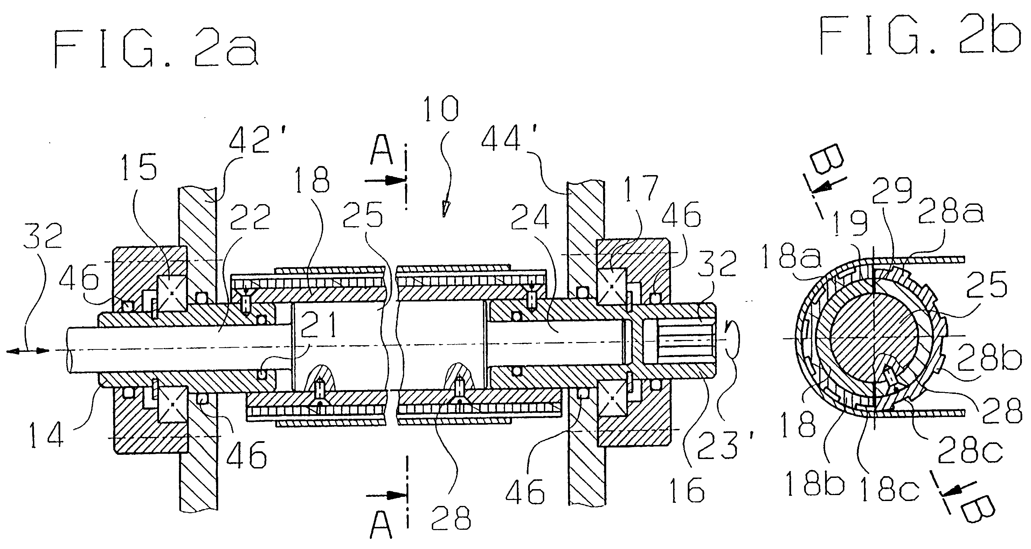

Bei der in Fig. 2 dargestellten Ausführungsform der Erfindung sind die Bauteile, die den anhand der Fig. 1 bereits erläuterten Bauteilen entsprechen mit denselben Bezugszeichen versehen. Abweichend von der Ausführungsform nach Fig. 1 ist die Antriebswalze 10 der in Fig. 2 dargestellten Ausführungsform in einer Vakuumkammer angeordnet, wobei die Hülsen 14 und 16 in einander gegenüberliegenden Wänden der Vakuumkammer drehbar gelagert sind. Die Drehlagerung erfolgt dabei über Kugellager 15 und 17. Eine Abdichtung des Innenraums der Vakuumkammer wird bei der Durchführung der Buchsen 16 und 14 durch die Kammerwände 42' und 44' mit Hilfe von O-Ringen 46 sichergestellt. Bei der in Fig. 2 dargestellten Ausführungsform der Erfindung ist das Wellenteil 18 mit einer Schraubverbindung an den drehbaren Lagerteilen 14 und 16 befestigt. In den Hülsen 14 und 16 sind Wellenstümpfe 22 und 24 einer Vollwelle 25 aufgenommen. Eine Abdichtung der Durchführung des Wellenstumpfes 22 in der Hülse 14 erfolgt hier mit Hilfe eines zwischen der Hülse 14 und dem Wellenstumpf 22 angeordneten Dichtelementes 21. Wie durch den Doppelpfeil 32 angedeutet ist die Vollwelle 25 zusammen mit den Wellenstümpfen 22 und 24 bezüglich den Hülsen 14 und 16 axial verschiebbar. An der Vollwelle 25 ist ein eine Außenfläche der Walze bildendes Walzenteil 28 in Form einer Halbschale befestigt und zusammen mit der Vollwelle 25 axial verschiebbar bezüglich den Hülsen 14 und 16 und damit auch bezüglich dem Walzenteil 18 angeordnet. Auch bei dieser Ausführungsform der Erfindung liegen die Stirnflächen 19 des Walzenteils 18 an den Stirnflächen 29 des Walzenteils 28 an, wie in Fig. 2b dargestellt. Dadurch wird eine drehfeste Kopplung des Walzenteils 28 über die Vollwelle 25 und die Wellenstümpfe 22 und 24 an die über die Schraubverbindung mit dem Walzenteil 18 verbundenen drehbaren Lagerteile 14 und 16 erreicht.

Wie besonders deutlich in Fig. 2b dargestellt, weisen die Walzenteile 18 und 28 an ihren Außenflächen gummiartige Elemente 18a und 28a auf, die mit sich in axialer Richtung erstreckenden Vorsprüngen 18b und 28b versehen sind, welche durch sich ebenfalls in axialer Richtung erstreckende Rillen 18c und 28c voneinander getrennt sind.

Bei dieser Ausführungsform der Erfindung erfolgt der Drehantrieb der Walze 10 über eine in der Hülse 16 aufgenommene Keilhülse 32, wie durch den Pfeil 23' angedeutet.

Bei den anhand der Fig. 1 und 2 erläuterten Ausführungsformen der Erfindung bildet die Vollwelle 25 eine Auflage für die mit den drehbar gelagerten Hülsen 14 und 16 verbundenen Walzenteile 28 und 18. Zusammenwirkend mit den in den Hülsen 14 und 16 aufgenommenen Wellenstümpfen wird dadurch eine Stabilisierung der gesamten Walze erreicht.

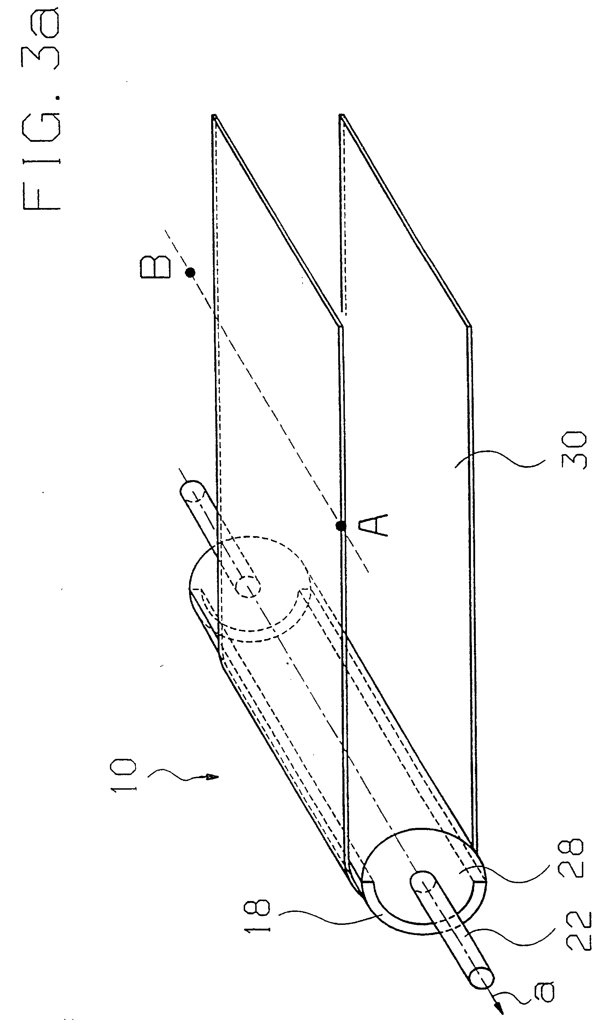

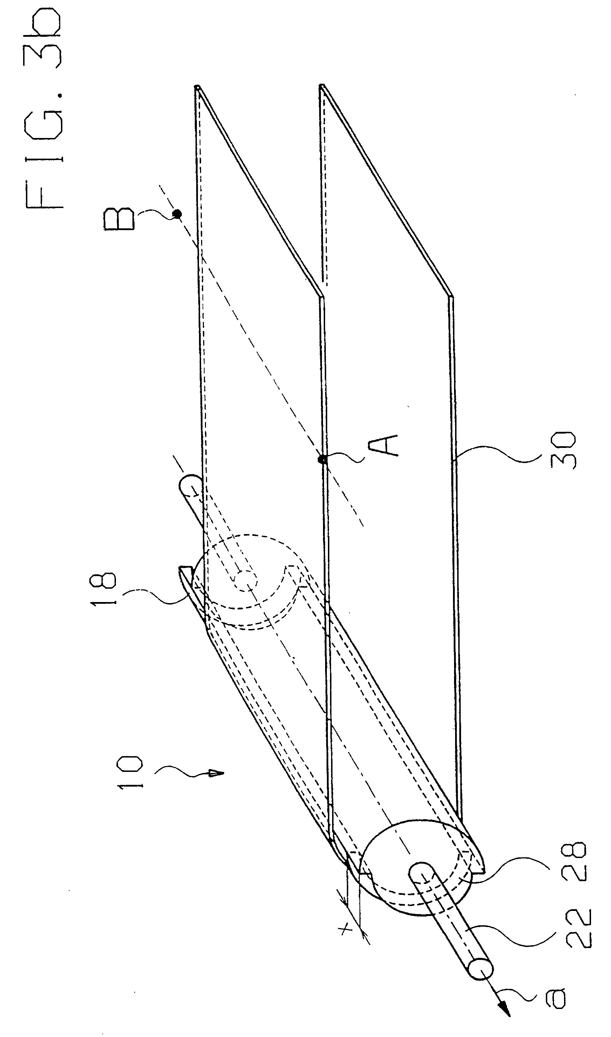

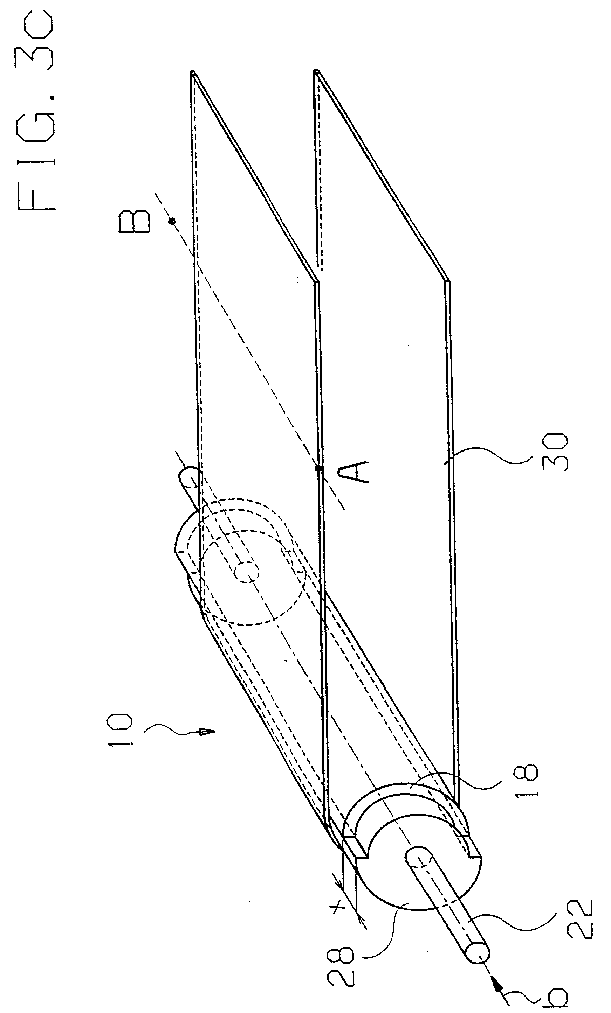

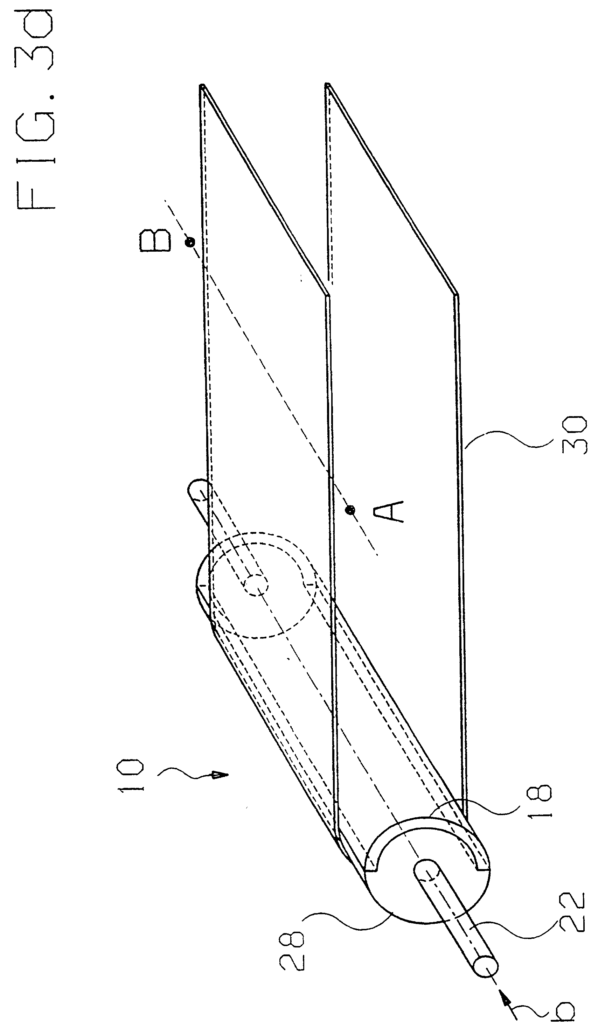

Nachstehend wird anhand der Fig. 3a bis 3d die Funktion der erfindungsgemäßen Fördereinrichtung erläutert. Falls mit einem Sensor A erfaßt wird, daß das Förderband 30 in der durch den Pfeil a angedeuteten Richtung verschoben ist, wird das Walzenteil 28 über den Wellenstumpf 22 in einer Betriebsphase, in der das Förderband 30 am Walzenteil 18 und nicht am Walzenteil 28 anliegt, in der durch den Pfeil a bezeichneten Richtung verschoben (Fig. 3b). Gelangt das Walzenteil 28 durch Drehung der Walze 10 in Kontakt mit dem Förderband 30 kann es mit einem in der Zeichnung nicht dargestellten Verstellmechanismus, ansprechend auf von einer Steuereinrichtung in Abhängigkeit von von der Erfassungseinrichtung A abgegebenen Erfassungssignalen erzeugten Steuersignalen in der der hier durch den Pfeil a bezeichneten Verschiebung entgegengesetzten Richtung verschoben werden, wie in Fig. 3c und 3d durch den Pfeil b angedeutet. Dadurch wird der unerwünschten Verschiebung des Förderbandes 30 entgegengewirkt. In der folgenden Betriebsphase in der wiederum nur das Walzenteil 18 und nicht das Walzenteil 28 am Förderband 30 anliegt, kann das Walzenteil 28 wieder in eine zentrale Position verschoben werden (vgl. Fig. 3a).

## Patentansprüche

1. Fördereinrichtung mit einem mindestens zwei Walzen (10) umlaufenden Förderband (30), bei der mindestens eine der Walzen (10) drehbar an einem Drehlager (14, 15, 16, 42, 42', 44, 44') gehalten und zumindest teilweise in axialer Richtung bezüglich dem Drehlager verschiebbar ist, **dadurch gekennzeichnet, daß** das Drehlager ein um die Achse der daran gehaltenen Walze (10) drehbares Lagerteil (14, 16) aufweist und die an dem Drehlager gehaltene Walze (10) mit einem das Drehlager durchsetzenden und drehfest an das Lagerteil (14, 16) gekoppelten Bauelement (22, 24) versehen ist, das in axialer Richtung bezüglich dem Lagerteil (14, 16) verschiebbar ist.

2. Fördereinrichtung nach Anspruch 1, **dadurch gekennzeichnet, daß** die Walze mindestens zwei in Umfangsrichtung aufeinanderfolgende Außenflächen der Walze bildende Walzenteile (18, 28) aufweist, von denen eines (28) an das axial verschiebbare Bauelement (22, 24) gekoppelt ist und das andere (18) in axialer Richtung bezüglich dem Drehlager festgelegt ist.

3. Fördereinrichtung nach Anspruch 2, **dadurch gekennzeichnet, daß** das in axialer Richtung bezüglich dem Drehlager festgelegte Walzenteil (18) an das drehbare Lagerteil (14, 16) gekoppelt ist.

4. Fördereinrichtung nach einem der Ansprüche 1 bis 3, **dadurch gekennzeichnet, daß** das drehbare Lagerteil (14, 16) die Form einer von einer Ausnehmung durchsetzten vorzugsweise hohlzylinderförmigen Hülse aufweist und das drehfest an das drehbare Lagerteil (14, 16) gekoppelte Bauelemnt (22, 24) die Form eines in der Ausnehmung aufgenommenen vorzugsweise etwa kreiszylinderförmigen Achs- bzw. Wellenstumpfes aufweist.

5. Fördereinrichtung nach Anspruch 4, **dadurch gekennzeichnet, daß** das drehfest an das drehbare Lagerteil (14, 16) gekoppelte Bauelement (22, 24) eine die die Außenfläche der Walze (10) bildenden Walzenteile (18, 28) abstützende Welle (25) ist.

6. Fördereinrichtung nach einem der Ansprüche 2 bis 5, **dadurch gekennzeichnet, daß** mindestens eines der die Außenfläche der Walze (10) bildenden Walzenteile (18, 28) die Form eines Kreiszlyindermantel-Segmentes, vorzugsweise einer Kreiszylindermantel-Halbschale aufweist.

7. Fördereinrichtung nach einem der vorhergehenden Ansprüche, **dadurch gekennzeichnet, daß** die Außenfläche der Walze zumindest teilweise mit reibungserhöhenden Mitteln (18a, 28a) versehen ist.

8. Fördereinrichtung nach Anspruch 7, **dadurch gekennzeichnet, daß** die reibungserhöhenden Mittel (18a, 28a) aus einem Elastomermaterial, vorzugsweise Gummi, bestehende Elemente aufweisen.

9. Fördereinrichtung nach Anspruch 7 oder 8, **dadurch gekennzeichnet, daß** die reibungserhöhenden Mittel in Umfangsrichtung der Walze durch Rillen (18c, 28c) voneinander getrennte sich in axialer Richtung erstreckende, radiale Vorsprünge (18b, 28b) aufweisen.

10. Fördereinrichtung nach einem der vorhergehenden Ansprüche, **dadurch gekennzeichnet, daß** das Förderband (30) zusammen mit den Walzen (10) in einer verschließbaren und vorzugsweise evakuierbaren Kammer angeordnet und mindestens ein Drehlager in einer Kammerwand (42', 44') angeordnet ist, wobei das drehfest an das drehbare Lagerteil (14, 16) gekoppelte Bauelement (22, 24) die Kammerwand (42', 44') durchsetzt.

11. Fördereinrichtung nach Anspruch 10, **dadurch gekennzeichnet, daß** zwischen dem drehbaren Lagerteil (14, 16) und der Kammerwand eine Drehdichtung (46) angeordnet ist.

12. Fördereinrichtung nach Anspruch 11, **dadurch gekennzeichnet, daß** die Drehdichtung mindestens einen O-Ring (46) aufweist.

13. Fördereinrichtung nach einem der vorhergehenden Ansprüche, **dadurch gekennzeichnet, daß** zwischen dem drehbaren Lagerteil (14, 16) und drehfest daran gekoppelten Bauelement (22, 24) eine Verschiebedichtung (21) angeordnet ist.

14. Fördereinrichtung nach Anspruch 13, **dadurch gekennzeichnet, daß** die Verschiebedichtung eine umlaufende und einen spitzen Winkel mit der Walzenachse einschließende Dichtlippe aufweist.

15. Fördereinrichtung nach einem der vorhergehenden Ansprüche, **dadurch gekennzeichnet, daß** eine Antriebseinrichtung an das drehbare Lagerteil (16) und/oder das drehfest daran gekoppelte Bauelement (22) gekoppelt ist.

16. Fördereinrichtung nach einem der vorhergehenden Ansprüche, **dadurch gekennzeichnet, daß** ein zur Bewirkung einer axialen Verschiebung betreibbarer Verstellmechanismus an das drehfest an das drehbare Lagerteil (14, 16) gekoppelte Bauelement (22, 24) gekoppelt ist.

17. Fördereinrichtung nach Anspruch 16, **gekennzeichnet durch** einen die Lage des Förderbandes (30) erfassenden Sensor (A) und eine Steuereinrichtung, mit der der Verstellmechanismus ansprechend auf von dem Sensor abgegebene Erfassungssignale angesteuert wird.

## Claims

1. Conveying device with a conveyor belt (30) running around at least two rolls (10), in which at least one of the rolls (10) is rotatably supported on a pivot bearing (14, 15, 16, 42, 42', 44, 44') and is at least partially displaceable in the axial direction relative to the pivot bearing, **characterised in that** the pivot bearing has a bearing part (14, 16) rotatable about the axis of the roll (10) supported thereon and the roll (10) supported on the pivot bearing is provided with a component (22, 24) traversing the pivot bearing, coupled in a torsionally rigid manner to the bearing part (14, 16) and displaceable in the axial direction relative to the bearing part (14, 16).

2. Conveying device according to claim 1, **characterised in that** the roll has at least two roll parts (18, 28) following one another in the circumferential direction and forming outer surfaces of the roll, one of which (28) is coupled to the axially displaceable component (22, 24) and the other of which (18) is fixed in the axial direction relative to the pivot bearing.

3. Conveying device according to claim 2, **characterised in that** the roll part (18) fixed in the axial direction relative to the pivot bearing is coupled to the rotatable bearing part (14, 16).

4. Conveying device according to one of claims 1 to 3, **characterised in that** the rotatable bearing part (14, 16) is in the form of a preferably hollow cylindrical sleeve traversed by a recess and the component (22, 24) coupled in a torsionally rigid manner to the rotatable bearing part (14, 16) is in the form of a preferably approximately circular cylindrical shaft stub or shaft end received in the recess.

5. Conveying device according to claim 4, **characterised in that** the component (22, 24) coupled in a torsionally rigid manner to the rotatable bearing part (14, 16) is a shaft (25) supporting the roll parts (18, 28) forming the outer surface of the roll (10).

6. Conveying device according to one of claims 2 to 5, **characterised in that** at least one of the roll parts (18, 28) forming the outer surface of the roll (10) is in the form of a circular cylindrical segment, preferably a circular cylindrical half shell.

7. Conveying device according to one of the preceding claims, **characterised in that** the outer surface of the roll is at least partially provided with friction-increasing means (18a, 28a).

8. Conveying device according to claim 7, **characterised in that** the friction-increasing means (18a, 28a) comprise elements consisting of an elastomeric material, preferably rubber.

9. Conveying device according to claim 7 or claim 8, **characterised in that** the friction-increasing means have radial projections (18b, 28b) extending in the axial direction and separated from one another in the circumferential direction of the roll by means of grooves (18c, 28c).

10. Conveying device according to one of the preceding claims, **characterised in that** the conveyor belt (30) is arranged together with the rolls (10) in a chamber which can be closed and preferably evacuated, and at least one pivot bearing is arranged in a chamber wall (42', 44'), the component (22, 24) coupled in a torsionally rigid manner to the rotatable bearing part (14, 16) traversing the chamber wall (42', 44').

11. Conveying device according to claim 10, **characterised in that** a rotary seal (46) is arranged between the rotatable bearing part (14, 16) and the chamber wall.

12. Conveying device according to claim 11, **characterised in that** the rotary seal has at least one O-ring (46).

13. Conveying device according to one of the preceding claims, **characterised in that** a sliding seal (21) is arranged between the rotatable bearing part (14, 16) and the component (22, 24) coupled in a torsionally rigid manner thereto.

14. Conveying device according to claim 13, **characterised in that** the sliding seal has a circumferential sealing lip including an acute angle with the roll axis.

15. Conveying device according to one of the preceding claims, **characterised in that** a drive device is coupled to the rotatable bearing part (16) and/or to the component (22) coupled in a torsionally rigid manner thereto.

16. Conveying device according to one of the preceding claims, **characterised in that** an adjusting mechanism which can be operated to effect axial displacement is coupled to the component (22, 24) coupled in a torsionally rigid manner to the rotatable bearing part (14, 16).

17. Conveying device according to claim 16, **characterised by** a sensor (A) sensing the position of the conveyor belt (30) and a control device by means of which the adjusting mechanism is actuated in response to sensing signals emitted by the sensor.

## Revendications

1. Dispositif de transport comprenant une bande de transport (30) passant autour d'au moins deux poulies (10), dans lequel au moins l'une des poulies (10) est maintenue dans un palier de rotation (14, 15, 16, 42, 42', 44, 44') de manière à pouvoir tourner et peut être déplacée au moins en partie dans le sens axial par rapport au palier de rotation, **caractérisé en ce que** le palier de rotation comporte une partie de palier (14, 16) susceptible de tourner autour de l'axe de la poulie (10) qui y est maintenue, et la poulie (10) maintenue dans le palier de rotation est munie d'un élément (22, 24), traversant le palier de rotation et accouplé avec la partie de palier (14, 16) de manière à ne pas tourner, lequel élément peut se déplacer dans le sens axial par rapport à la partie de palier (14, 16).

2. Dispositif de transport selon la revendication 1, **caractérisé en ce que** la poulie comporte deux parties de poulie (18, 28), se succédant dans le sens périphérique et formant les faces extérieures de la poulie, parmi lesquelles l'une (28) est accouplée avec l'élément (22, 24) pouvant se déplacer dans le sens axial et l'autre (18) est fixe dans le sens axial par rapport au palier de rotation.

3. Dispositif de transport selon la revendication 2, **caractérisé en ce que** la partie de poulie (18), fixe dans le sens axial par rapport au palier de rotation, est accouplée avec la partie de palier (14, 16) susceptible de tourner.

4. Dispositif de transport selon l'une quelconque des revendications 1 à 3, **caractérisé en ce que** la partie de palier (14, 16) pouvant tourner peut être conçue sous forme d'un manchon traversé par un évidement, de préférence un manchon cylindrique creux, et l'élément (22, 24), accouplé de manière à ne pas tourner avec la partie de palier (14, 16) pouvant tourner, est réalisé sous forme de bout d'axe ou bout d'arbre, de préférence sensiblement cylindrique circulaire, logé dans l'évidement.

5. Dispositif de transport selon la revendication 4, **caractérisé en ce que** l'élément (22, 24) accouplé de manière à ne pas tourner avec la partie de palier (14, 16) pouvant tourner est un arbre (25) destiné à supporter les parties de poulie (18, 28) formant la face extérieure de la poulie (10).

6. Dispositif de transport selon l'une quelconque des revendications 2 à 5, **caractérisé en ce qu'**au moins l'une des parties de poulie (18, 28) formant la face extérieure de la poulie (10) est conçue sous forme d'un segment de paroi cylindrique circulaire, de préférence une demi-coque à paroi cylindrique circulaire.

7. Dispositif de transport selon l'une quelconque des revendications précédentes, **caractérisé en ce que** la face extérieure de la poulie est munie au moins en partie de moyens augmentant le frottement (18a, 28a).

8. Dispositif de transport selon la revendication 7, **caractérisé en ce que** les moyens augmentant le frottement (18a, 28a) sont constitués par des éléments. réalisés dans un matériau élastomère, de préférence du caoutchouc.

9. Dispositif de transport selon la revendication 7 ou 8, **caractérisé en ce que** les moyens augmentant le frottement sont munis dans le sens périphérique de saillies radiales (18b, 28b), qui sont séparées les unes des autres par des cannelures (18c, 28c) et qui s'étendent dans le sens axial.

10. Dispositif de transport selon l'une quelconque des revendications précédentes, **caractérisé en ce que** la bande de transport (30) est montée avec les poulies (10) dans une chambre pouvant être fermée et pouvant, de préférence aussi, être mise sous vide, et au moins un palier de rotation est disposé dans une paroi (42', 44') de la chambre, l'élément (22, 24), accouplé de manière à ne pas tourner avec la partie de palier (14, 16) pouvant tourner, traversant la paroi (42', 44') de la chambre.

11. Dispositif de transport selon la revendication 10, **caractérisé en ce qu'**un élément d'étanchéité pour pièces rotatives (46) est disposé entre la partie de palier (14, 16) pouvant tourner et la paroi de la chambre.

12. Dispositif de transport selon la revendication 11, **caractérisé en ce que** l'élément d'étanchéité pour pièces rotatives est formé par au moins un joint torique (46).

13. Dispositif de transport selon l'une quelconque des revendications précédentes, **caractérisé en ce qu'**un élément d'étanchéité pour pièces coulissantes (21) est disposé entre la partie de palier (14, 16) pouvant tourner et l'élément (22, 24) accouplé avec celle-ci de manière à ne pas tourner.

14. Dispositif de transport selon la revendication 13, **caractérisé en ce que** l'élément d'étanchéité pour pièces coulissantes comporte une lèvre d'étanchéité périphérique, qui forme un angle aigu avec l'axe de la poulie.

15. Dispositif de transport selon l'une quelconque des revendications précédentes, **caractérisé en ce qu'**un dispositif d'entraînement est accouplé avec la partie de palier (16) pouvant tourner et/ou avec l'élément (22) assemblé contre celle-ci de manière à ne pas tourner.

16. Dispositif de transport selon l'une quelconque des revendications précédentes, **caractérisé en ce qu'**un mécanisme de réglage actionnable pour la réalisation d'un déplacement axial est accouplé avec l'élément (22, 24) accouplé de manière à ne pas tourner avec la partie de palier (14, 16) pouvant tourner.

17. Dispositif de transport selon la revendication 16, **caractérisé par** un capteur (A) enregistrant la position de la bande de transport (30) et un dispositif de commande, qui commande le mécanisme de réglage à la suite des signaux émis par le capteur.
